# EUROPEAN PATENT APPLICATION

(11) **EP 4 845 056 A1**
(43) Date of publication of application: **25.11.2026**
(21) Application number: 26161098.4
(22) Date of filing: 26.02.2026
(51) Int. Cl.: H04B 10/70, H04J 14/02

(54) **CONTROL DEVICE, QUANTUM CRYPTOGRAPHIC COMMUNICATION SYSTEM, CONTROL METHOD, AND COMPUTER PROGRAM**

(30) Priority: 23.05.2025 JP 2025086045
(71) Applicant: KABUSHIKI KAISHA TOSHIBA, Kawasaki-shi, Kanagawa 212-0013 (JP)
(72) Inventor: MERA, Keisuke, Kawasaki-shi (JP); TANIZAWA, Yoshimichi, Kawasaki-shi (JP)
(74) Representative: Marks & Clerk LLP

(57) **Abstract**

A control device (1) according to an embodiment includes a processing unit (12). The processing unit (12) determines a multiplex ratio at which two or more optical signals are to be multiplexed by a variable optical coupler (5). The multiplex ratio is determined based on requirement information about an optical signal representing a quantum signal or a digital coherent signal. The digital coherent signal is a signal of a channel different from a channel of the quantum signal. The processing unit (12) outputs, to the variable optical coupler (5), control information including the multiplex ratio.

## Description

### FIELD

Embodiments described herein relate generally to a control device, a quantum cryptographic communication system, a control method, and a computer program.

### BACKGROUND

An on-off keying (OOK) encoding system has been known, in which digital data is encoded into light pulses according to the presence or absence of light pulses.

As a future optical network of communication carriers, in addition to an optical transmission system based on a conventional OOK encoding system, an optical transmission system called "digital coherent", in which digital data is loaded also on phases, polarized waves (polarized light), etc., is being actively developed.

However, in the conventional technology, it has been difficult to more appropriately determine the ratio at which two or more optical signals are to be multiplexed.

### BRIEF DESCRIPTION OF THE DRAWINGS

FIG. 1 is a diagram illustrating an example of a device configuration of a quantum cryptographic communication system of a first embodiment;
FIG. 2 is a diagram illustrating an example of a functional configuration of a control device of the first embodiment;
FIG. 3A is a diagram illustrating a first example of a user IF of the first embodiment;
FIG. 3B is a diagram illustrating a second example of the user IF of the first embodiment;
FIG. 4 is a flowchart illustrating an operation example of the control device of the first embodiment;
FIG. 5 is a flowchart illustrating an operation example of a determination unit of the first embodiment;
FIG. 6A is a diagram illustrating an image of a processing example of step S13 of FIG. 5;
FIG. 6B is a diagram illustrating an image of a processing example of step S14 of FIG. 5;
FIG. 6C is a diagram illustrating an image of a processing example of step S16 of FIG. 5;
FIG. 6D is a diagram illustrating an image of a processing example of step S17 of FIG. 5;
FIG. 6E is a diagram illustrating an image of a processing example of step S19 of FIG. 5;
FIG. 6F is a diagram illustrating an image of a processing example of step S20 of FIG. 5;
FIG. 7 is a diagram illustrating an example of a device configuration of a quantum cryptographic communication system of a second embodiment; and
FIG. 8 is a diagram illustrating an example of a hardware configuration of the control devices of the first and second embodiments.

### DETAILED DESCRIPTION

According to one embodiment, a control device includes a processing unit. The processing unit is configured to determine a multiplex ratio at which two or more optical signals are to be multiplexed by a variable optical coupler. The multiplex ratio is determined based on requirement information about an optical signal representing a quantum signal or a digital coherent signal. The digital coherent signal is a signal of a channel different from a channel of the quantum signal. The processing unit is configured to output, to the variable optical coupler, control information including the multiplex ratio.

Hereinbelow, embodiments of a control device, a quantum cryptographic communication system, a control method, and a computer program are described in detail with reference to the accompanying drawings.

An optical signal of digital coherent communication (hereinafter, referred to as a "digital coherent signal") has advantages of higher transmission density per one wavelength channel and capability of implementing higher-speed, higher-efficiency data communication than an OOK signal. For example, in the communication specifications called an All-Photonics Network (APN), it is expected that high-speed, large-capacity data communication can be implemented by a digital coherent signal. On the other hand, the digital coherent signal has a disadvantage of being susceptible to noise.

In these days, quantum computers, quantum sensors, and the like are remarkably developed, and communication technologies using quanta are being actively developed. For example, a quantum communication technology for connecting a quantum computer, a quantum sensor, etc. to each other is being actively developed. Further, for example, a quantum communication technology for countering a threat of decryption by a quantum computer is being actively developed. Specifically, quantum communication technologies include a quantum cryptographic communication technology based on quantum key distribution (QKD), a quantum communication technology using quantum entanglement, and the like.

In order to implement quantum communication, quantum cryptographic communication, and the like with optical fibers, a system using a signal (hereinafter, referred to as a "quantum signal") in which information is loaded on photons, which are each the minimum unit of light, is generally used. For the quantum signal, it is necessary to transmit extremely weak light compared to the signal strength of common optical communication.

In general, the number of existing optical fibers (the number of cores) is finite, and the cost for newly laying a long-distance optical fiber, the cost for using the existing long-distance optical fibers, etc. are correspondingly high. Thus, optical wavelength-division multiplexing (WDM), which is an optical wavelength multiplexing technology, is applied so that various communications can be performed with as few fibers as possible. The optical WDM, in which a plurality of channels created by division with pieces of light of a plurality of wavelengths are passed through the same fiber, is useful for effective utilization of the resources of optical fibers and cost reduction.

To pass a quantum signal through an optical fiber through which a digital coherent signal flows, it is necessary to apply an optical wavelength multiplexing technology to multiplex the digital coherent signal and the quantum signal, which have different wavelengths, and pass the multiplexed signal through the optical fiber.

When using an optical coupler to multiplex a digital coherent signal and a quantum signal having different wavelengths, the following problems exist.

As compared to conventional OOK for optical fibers (a system in which digital data is transmitted by ON/OFF of light) called digital coherent communication, the digital coherent signal has the property of being susceptible to noise, influence from other signals, and the like.

Similarly to the digital coherent signal, the quantum signal has the property of being susceptible to noise, influence from other signals, and the like because of the use of very weak light of one photon or less.

Thus, to multiplex a digital coherent signal, a quantum signal, etc., it is important to prevent each signal from weakening to the extent possible.

### First embodiment

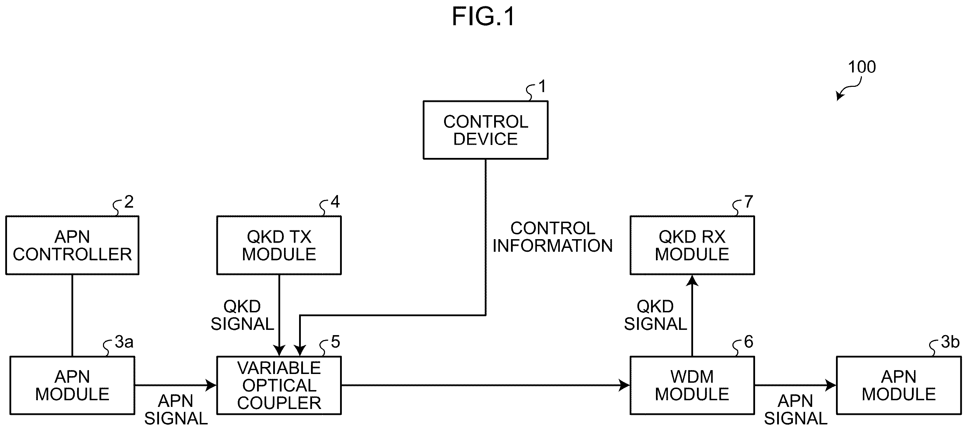

FIG. 1 is a diagram illustrating an example of a device configuration of a quantum cryptographic communication system 100 of a first embodiment. The quantum cryptographic communication system 100 includes a control device 1, an APN controller 2, APN modules 3a and 3b, a QKD TX module 4, a variable optical coupler 5, a WDM module 6, and a QKD RX module 7.

The control device 1 is a variable optical coupler controller that controls the variable optical coupler 5.

The APN controller 2 is a device that controls APN (All-Photonics Network) using a digital coherent signal (in the first embodiment, an APN signal). The APN controller 2 may be a system configured by a plurality of devices.

The APN module 3a is a device that, based on control of the APN controller 2, transmits and receives an APN signal in which digital data is encoded. In the example of FIG. 1, a case where the APN module 3a transmits an APN signal to the APN module 3b is described. The APN module 3a may be a system configured by a plurality of devices.

In the first embodiment, an APN signal (an example of a digital coherent signal) and a QKD signal (an example of a quantum signal) are subjected to optical wavelength multiplexing. Thus, based on, for example, ITU-T G694.1 dense wavelength-division multiplexing (DWDM), the APN signal preferably uses, as an APN wavelength band, a wavelength channel different from that of the QKD signal.

The information transmitted by the APN signal may be arbitrary. For example, the data transmitted by the APN signal may be data related to encryption processing and decryption processing using a quantum key generated by the QKD signal, or may be data not related to the encryption processing or the decryption processing.

The QKD TX module 4 is a device that transmits a QKD signal in which random number data used for generation of an encryption key is encoded and shares an information-theoretically secure encryption key with the QKD RX module 7. In the first embodiment, since the APN signal and the QKD signal are subjected to optical wavelength multiplexing, the QKD signal preferably uses, as a QKD wavelength band, a wavelength channel different from that of the APN signal.

The variable optical coupler 5 is a device that mixes two or more optical signals at a predetermined ratio and transmits the mixed optical signal. As a component that sets the predetermined ratio, for example, a mechanical component such as a dial, a variable resistor, or a potentiometer is often used. In the first embodiment, the predetermined ratio is automatically changed based on a control signal from the control device 1. Thus, for example, the variable optical coupler 5 includes a motor or the like for rotating the mechanical component based on the control signal.

The WDM module 6 is a device that demultiplexes, with the wavelength bands, the optical signal in which the APN signal and the QKD signal are subjected to optical wavelength multiplexing.

The QKD RX module 7 is a device that receives the QKD signal transmitted from the QKD TX module 4 and shares an information-theoretically secure encryption key with the QKD TX module 4.

The APN module 3b is a device that decodes digital data from the received APN signal. The APN module 3b may be a system configured by a plurality of devices.

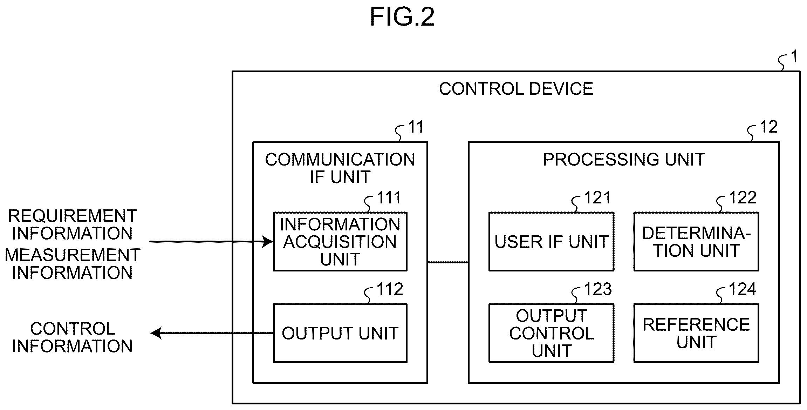

FIG. 2 is a diagram illustrating an example of a functional configuration of the control device 1 of the first embodiment. The control device 1 includes a communication interface (IF) unit 11 and a processing unit 12.

The communication IF unit 11 acquires and outputs information with at least one of a wired communication system or a wireless communication system. The communication IF unit 11 includes an information acquisition unit 111 and an output unit 112.

The information acquisition unit 111 acquires requirement information transmitted from other devices. The other device may be arbitrary. For example, the other device is the APN controller 2 described above. Further, for example, the other device is a terminal used by a user. Further, for example, the other device is a QKDN controller that manages a quantum key distribution network, which is secure communication using a QKD signal. Further, for example, the other device is an encryption device that encrypts data with a quantum key obtained from the QKD TX module 4 described above. Further, for example, the other device is a decryption device that decrypts data with a quantum key obtained from the QKD RX module 7 described above.

The requirement information includes a requirement of an optical signal representing a QKD signal or an APN signal. The APN signal is a signal of a channel different from the channel of the QKD signal.

For example, the requirement information includes at least one of a performance requirement of the QKD signal (for example, the communication speed of the QKD signal) or a performance requirement of the APN signal (for example, the communication speed of the APN signal).

Further, for example, the requirement information includes an element to be maximized in the performance of the QKD signal (for example, the communication speed of the QKD signal) or an element to be maximized in the performance of the APN signal (for example, the communication speed of the APN signal).

Further, the information acquisition unit 111 acquires measurement information transmitted from other devices. The measurement information includes, for example, the communication speed of the QKD signal and the communication speed of the APN. The other device that measures measurement information may be arbitrary according to the measurement target. For example, the other device that measures measurement information is the QKD TX module 4 that transmits a QKD signal, the QKD RX module 7 that receives a QKD signal, the APN module 3b that receives an APN signal, or the like.

The output unit 112 outputs, to the variable optical coupler 5, control information including the ratio (an example of a multiplex ratio) at which two or more optical signals are to be multiplexed by the variable optical coupler 5.

The processing unit 12 includes, for example, an arithmetic device, and is configured by an analog or digital circuit or the like. The processing unit 12 may be a central processing unit (CPU), or may be a general-purpose processor, a microprocessor, a digital signal processor (DSP), an application-specific integrated circuit (ASIC), a field-programmable gate array (FPGA), or a combination thereof.

The processing unit 12 includes a user interface (IF) unit 121, a determination unit 122, an output control unit 123, and a reference unit 124.

The user IF unit 121 controls, via the communication IF unit 11, generation and display of a user interface through which the requirement information described above is to be inputted, acceptance of requirement information inputted through the user interface, etc.

The determination unit 122 determines the ratio (multiplex ratio) at which the two or more optical signals are to be multiplexed by the variable optical coupler 5. The ratio is determined based on requirement information about an optical signal representing a QKD signal or an APN signal that is a signal of a channel different from the channel of the QKD signal. Specifically, the determination unit 122 determines, based on requirement information, an optimum ratio of the power of the QKD signal and the power of the APN signal. For example, the determination unit 122 determines a ratio satisfying at least one of the performance requirements of the QKD signal or the performance requirements of the APN signal.

The output control unit 123 performs control to output, from the output unit 112, control information including the ratio determined by the determination unit 122.

For example, in the case where the variable optical coupler 5 that multiplexes two optical signals has a function of receiving the multiplexing ratio as numerical data of a percent (%), the ratio included in the control information is a value of a percent (%).

Further, for example, in the case where the variable optical coupler 5 changes the multiplexing ratio with the potentiometer described above, the ratio included in the control information is the rotation angle of the potentiometer. In this case, the variable optical coupler 5 is preferably provided with a stepping motor that rotates the potentiometer.

Any communication method can be applied to the method for sending control information. Any mechanism can be applied to the mechanism such as a motor that operates the variable optical coupler 5.

The reference unit 124 refers to the measurement information described above, and determines whether the requirement information described above is satisfied or not.

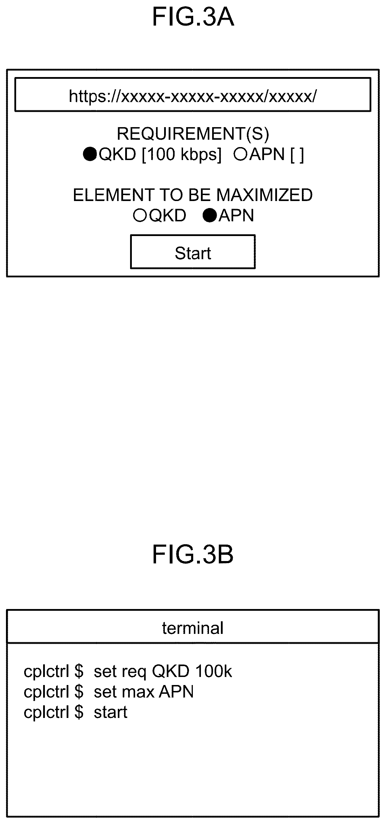

FIG. 3A is a diagram illustrating a first example of the user IF of the first embodiment. FIG. 3A illustrates a case where the user IF unit 121 provides a user IF by using a graphical user interface (GUI).

In the example of GUI of FIG. 3A, a communication speed (100 kbps) of a QKD signal is designated as a requirement for the QKD signal. The order of the designated signal speed is usually Kbps to Mbps for QKD signals and Gbps to Tbps for APN signals. This is because the intensity of photons is in a relationship of (the intensity of the APN signal) > (the intensity of the QKD signal) and the number of channels consumed to transmit the signal is in a relationship of (the number of channels of the APN signal) > (the number of channels of the QKD signal).

In the example of GUI of FIG. 3A, an APN signal is used as an element to be maximized. The element to be maximized is, for example, the communication speed.

In the example of GUI of FIG. 3A, the requirement for the QKD signal is 100 kbps, and requirement information in which the communication speed of the APN signal is set larger is prescribed.

Although the example of GUI of FIG. 3A is described using, as an example, a case where the combination of two optical signals is a QKD signal and an APN signal, the combination of two optical signals may be a combination of optical signals of the same type. Specifically, the combination of two optical signals may be a combination of a first QKD signal and a second QKD signal, or may be a combination of a first APN signal and a second APN signal. The GUI that accepts requirements of optical signals of the same type and designation of an element to be maximized is similar to the GUI of FIG. 3A. For example, a GUI in the case of a combination of a first QKD signal and a second QKD signal can be obtained by switching the display of QKD of FIG. 3A to the first QKD and switching the display of APN to the second QKD.

FIG. 3B is a diagram illustrating a second example of the user IF of the first embodiment. FIG. 3B illustrates a case where the user IF unit 121 provides a user IF by using a command line interface (CLI).

In the example of CLI of FIG. 3B, requirement information similar to that of GUI of FIG. 3A is inputted by characters through the CLI.

Although the example of CLI of FIG. 3B is described using, as an example, a case where the combination of two optical signals is a QKD signal and an APN signal, the combination of two optical signals may be a combination of optical signals of the same type. Specifically, the combination of two optical signals may be a combination of a first QKD signal and a second QKD signal, or may be a combination of a first APN signal and a second APN signal.

FIGS. 3A and 3B are merely examples, and the content inputted by the user, the input format, the display content, the display format, etc. are arbitrary. Further, although the examples of FIGS. 3A and 3B are examples assuming that requirement information is inputted by the user, the input of requirement information may be accepted without an operation by the user. For example, the control device 1 may include an interface that automatically accepts input of requirement information from a management system of a network of QKD signals, a management system of a network of APN signals, or the like.

In the following description, particularly in the drawings, a QKD signal (an example of a quantum signal) may be represented by a symbol "QKD" due to limitations on the paper sheets. Similarly, an APN signal (an example of a digital coherent signal) may be represented by a symbol "APN".

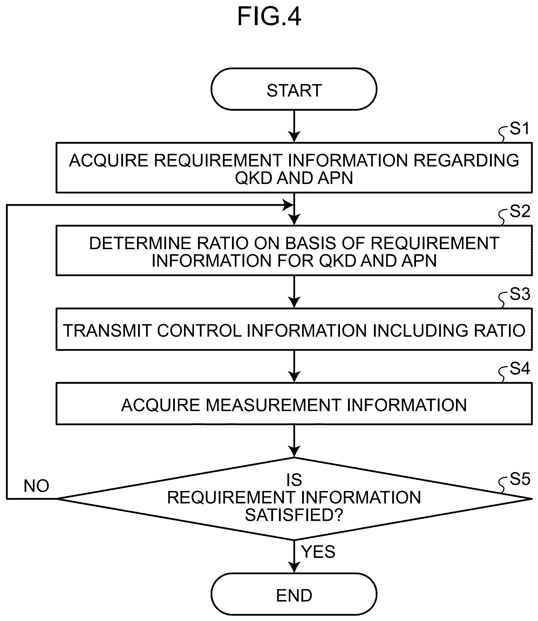

FIG. 4 is a flowchart illustrating an operation example of the control device 1 of the first embodiment. First, the information acquisition unit 111 acquires the above requirement information regarding QKD and APN from other devices (step S1).

The requirement information may be prescribed by a combination of QKD and APN, or may be prescribed by a combination of QKD and QKD, or a combination of APN and APN.

Next, the determination unit 122 determines, based on the requirement information for QKD and APN, the ratio at which two or more optical signals are to be multiplexed by the variable optical coupler 5 (step S2). Specifically, the determination unit 122 specifies, from the requirement information, the requirement described above (for example, the communication speed of the QKD signal being 100 kbps) and an element to be maximized (for example, the communication speed of the APN signal), and determines an optimum ratio that satisfies the requirement and maximizes the element.

Next, the output unit 112 outputs control information including the ratio determined in step S2 to the variable optical coupler 5 (step S3). The variable optical coupler 5 multiplexes two or more optical signals based on the ratio included in the control information.

Next, the information acquisition unit 111 acquires the measurement information described above from other devices (step S4). Next, the reference unit 124 refers to the measurement information, and determines whether the requirement information acquired in step S1 is satisfied or not (step S5).

In the case where the requirement information is not satisfied (step S5, No), the processing returns to step S2. In the case where the requirement information is satisfied (step S5, Yes), the processing ends. Note that in the case where a ratio satisfying the requirement information cannot be determined even if the processing returns to the processing of step S2 and the processing is performed repeatedly a predetermined number of times, the processing may be performed again from the processing of step S1. That is, a request for new requirement information regarding QKD and APN, and acquisition of the new requirement information may be performed.

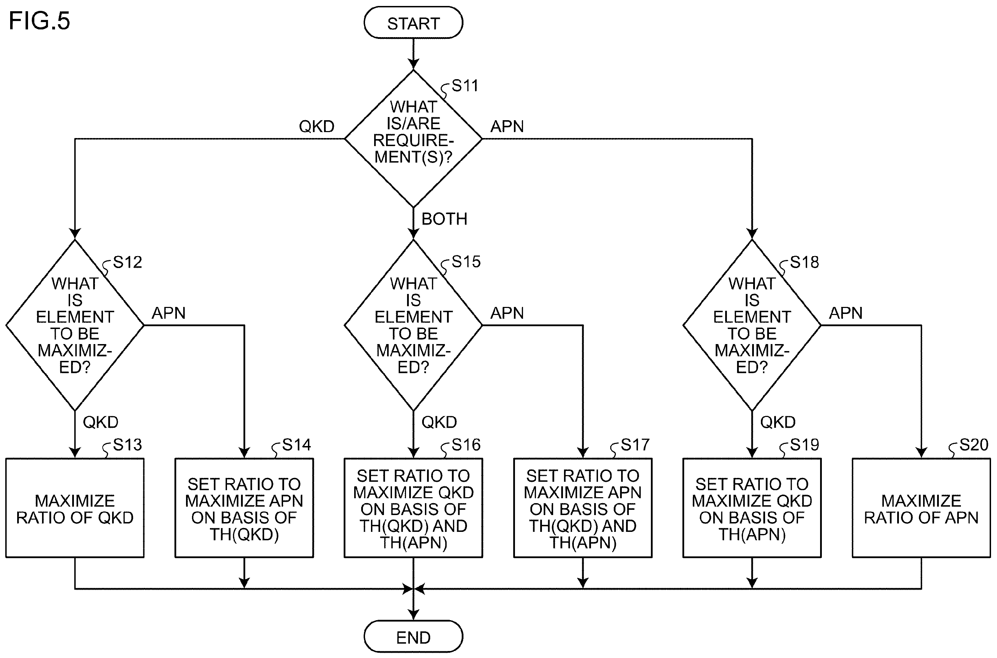

FIG. 5 is a flowchart illustrating an operation example of the determination unit 122 of the first embodiment. The flowchart of FIG. 5 illustrates processing of determining the ratio of QKD (a quantum signal) and APN (a digital coherent signal) to be multiplexed by the variable optical coupler 5. First, the determination unit 122 determines a requirement based on requirement information acquired by the information acquisition unit 111 (step S11).

In the case where the requirement is QKD (step S11, QKD), the determination unit 122 determines an element to be maximized based on the requirement information (step S12).

In the case where the element to be maximized is QKD (step S12, QKD), the determination unit 122 maximizes the ratio of QKD (step S13).

In the case where the element to be maximized is APN (step S13, APN), the determination unit 122 determines a ratio to maximize APN based on a threshold (TH(QKD)) based on the requirement of QKD (step S14). For example, the determination unit 122 determines a ratio to maximize APN in a range in which the communication speed of QKD is TH(QKD) or more.

In the case where the requirement is QKD and APN (step S11, both), the determination unit 122 determines an element to be maximized based on the requirement information (step S15).

In the case where the element to be maximized is QKD (step S15, QKD), the determination unit 122 determines a ratio to maximize QKD based on a threshold (TH(QKD)) based on the requirement of QKD and a threshold (TH(APN)) based on the requirement of APN (step S16). For example, the determination unit 122 determines a ratio to maximize QKD in a range in which the communication speed of QKD is TH(QKD) or more and the communication speed of APN is TH(APN) or more.

In the case where the element to be maximized is APN (step S15, APN), the determination unit 122 determines a ratio to maximize APN based on a threshold (TH(QKD)) based on the requirement of QKD and a threshold (TH(APN)) based on the requirement of APN (step S17). For example, the determination unit 122 determines a ratio to maximize APN in a range in which the communication speed of QKD is TH(QKD) or more and the communication speed of APN is TH(APN) or more.

In the case where the requirement is APN (step S11, APN), the determination unit 122 determines an element to be maximized based on the requirement information (step S18).

In the case where the element to be maximized is QKD (step S18, QKD), the determination unit 122 determines a ratio to maximize QKD based on a threshold (TH(APN)) based on the requirement of APN (step S19). For example, the determination unit 122 determines a ratio to maximize QKD in a range in which the communication speed of APN is TH(APN) or more.

In the case where the element to be maximized is APN (step S18, APN), the determination unit 122 maximizes the ratio of APN (step S20).

In the case where, in steps S13 and S14, S16 and S17, and S19 and S20 of FIG. 5 described above, an optimum ratio cannot be determined at a time, control to determine a ratio satisfying the requirement information is performed while repeating as illustrated in the flowchart of FIG. 4 described above.

Although the example of the flowchart of FIG. 5 is described using, as an example, a case where the combination of two optical signals is a QKD signal and an APN signal, the combination of two optical signals may be a combination of optical signals of the same type. Specifically, the combination of two optical signals may be a combination of a first QKD signal and a second QKD signal, or may be a combination of a first APN signal and a second APN signal.

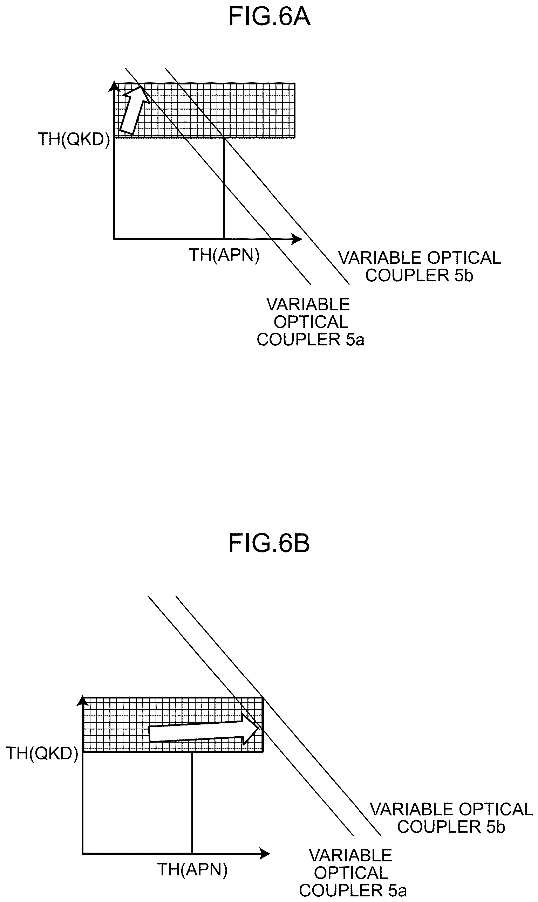

FIG. 6A is a diagram illustrating an image of a processing example of step S13 of FIG. 5. The vertical axis represents the performance (for example, the communication speed) of QKD (a quantum signal). The horizontal axis represents the performance (for example, the communication speed) of APN (a digital coherent signal). The determination unit 122 determines a ratio to maximize QKD in a range in which the performance of QKD is TH(QKD) or more.

The ratio to maximize QKD depends also on the specifications of the variable optical coupler 5. In the example of FIG. 6A, the specification of a variable optical coupler 5b is higher than the specification of a variable optical coupler 5a. Therefore, the variable optical coupler 5b can allocate a larger ratio to APN than the variable optical coupler 5a while satisfying the requirement required for QKD.

FIG. 6B is a diagram illustrating an image of a processing example of step S14 of FIG. 5. The vertical axis and the horizontal axis are the same as those of FIG. 6A. The determination unit 122 determines a ratio to maximize APN in a range in which the performance of QKD is TH(QKD) or more.

The ratio to maximize APD depends also on the specifications of the variable optical coupler 5 like in the case of FIG. 6A.

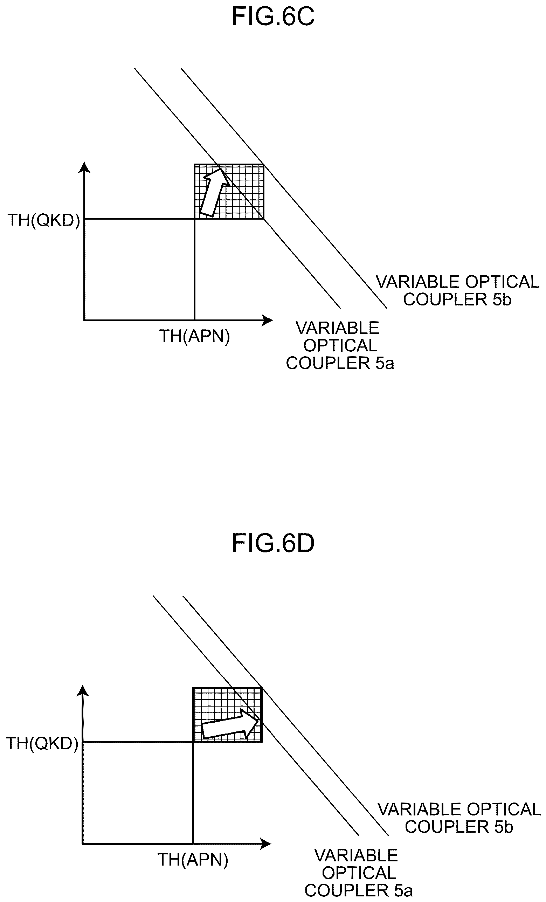

FIG. 6C is a diagram illustrating an image of a processing example of step S16 of FIG. 5. The vertical axis and the horizontal axis are the same as those of FIG. 6A. The determination unit 122 determines a ratio to maximize QKD in a range in which the performance of QKD is TH(QKD) or more and the performance of APN is TH(APN) or more.

The ratio to maximize QKD depends also on the specifications of the variable optical coupler 5 like in the case of FIG. 6A.

FIG. 6D is a diagram illustrating an image of a processing example of step S17 of FIG. 5. The vertical axis and the horizontal axis are the same as those of FIG. 6A. The determination unit 122 determines a ratio to maximize APN in a range in which the performance of QKD is TH(QKD) or more and the performance of APN is TH(APN) or more.

The ratio to maximize APN depends also on the specifications of the variable optical coupler 5 like in the case of FIG. 6A.

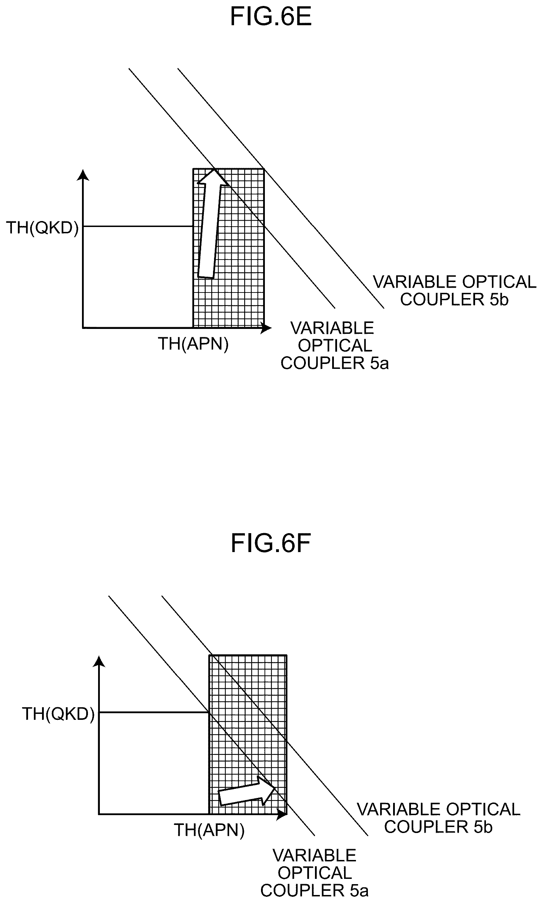

FIG. 6E is a diagram illustrating an image of a processing example of step S19 of FIG. 5. The vertical axis and the horizontal axis are the same as those of FIG. 6A. The determination unit 122 determines a ratio to maximize QKD in a range in which the performance of APN is TH(APN) or more.

The ratio to maximize QKD depends also on the specifications of the variable optical coupler 5 like in the case of FIG. 6A.

FIG. 6F is a diagram illustrating an image of a processing example of step S20 of FIG. 5. The vertical axis and the horizontal axis are the same as those of FIG. 6A. The determination unit 122 maximizes the ratio of APN.

The ratio to maximize QKD depends also on the specifications of the variable optical coupler 5 like in the case of FIG. 6A.

Although the examples of FIGS. 6A to 6F are described using, as an example, a case where the combination of two optical signals is a QKD signal and an APN signal, the combination of two optical signals may be a combination of optical signals of the same type. Specifically, the combination of two optical signals may be a combination of a first QKD signal and a second QKD signal, or may be a combination of a first APN signal and a second APN signal.

As described hereinabove, in the control device 1 of the first embodiment, the determination unit 122 determines the ratio at which two or more optical signals are to be multiplexed by the variable optical coupler 5 based on requirement information about an optical signal representing a quantum signal (for example, a QKD signal) or a digital coherent signal (for example, an APN signal) of a channel different from the channel of the quantum signal. Then, the output control unit 123 performs control to output control information including the ratio to the variable optical coupler 5.

For example, the determination unit 122 determines the ratio at which two or more optical signals including at least one quantum signal and at least one digital coherent signal are to be multiplexed by the variable optical coupler 5, and outputs control information including the ratio to the variable optical coupler 5.

Thus, by the control device 1 of the first embodiment, the ratio at which two or more optical signals are to be multiplexed can be determined more appropriately. Specifically, the variable optical coupler 5 can be controlled such that, after the requirement of the quantum signal or the digital coherent signal is satisfied, the ratio at which both signals are to be multiplexed is a more appropriate ratio.

### Modification example of the first embodiment

Next, a modification example of the first embodiment is described. In the description of the modification example, descriptions similar to those of the first embodiment are omitted, and portions different from the first embodiment are described. In the modification example, a case where there are a plurality of APN modules 3a that transmit APN signals and there are a plurality of QKD TX modules 4, that is, a case where three or more optical signals are multiplexed is described.

The control device 1 of the first embodiment described above can be used also for a case where three or more optical signals are multiplexed.

Specifically, first, in step S11 of the flowchart of FIG. 5 described above, the determination unit 122 determines whether the requirement prescribed for QKD or APN is satisfied.

Next, processing of determining an element to be maximized in steps S12 to S20 is described.

For example, in the case where the element to be maximized is QKD and there are a plurality of QKD TX modules 4, determination methods (1) to (3) below are applied.
(1) After the requirement of step S11 is satisfied, the ratio allocated to a QKD signal transmitted from a specific QKD TX module 4 among the plurality of QKD TX modules 4 is maximized.
(2) After the requirement of step S11 is satisfied, QKD signals transmitted from the plurality of QKD TX modules 4 are allocated equally.
(3) After the requirement of step S11 is satisfied, QKD signals transmitted from the plurality of QKD TX modules 4 are allocated at a predetermined ratio prescribed for the plurality of QKD TX modules 4.

In the case where the element to be maximized is APN and there are a plurality of APN modules 3a that transmit APN signals, the procedure is implemented in a similar manner to the case where the element to be maximized is QKD and there are a plurality of QKD TX modules 4.

As described hereinabove, in the modification example, for example, the two or more optical signals include a plurality of quantum signals (for example, QKD signals). The requirement information includes an element to be maximized in the performance of the quantum signal. The determination unit 122 determines the ratio at which at least one of the performance requirement of the quantum signal or the performance requirement of the digital coherent signal is satisfied and the element to be maximized is larger by any one of (1) a method of setting larger the ratio allocated to a specific quantum signal among the plurality of quantum signals, (2) a method of equalizing the ratios allocated to the plurality of quantum signals, or (3) a method of performing allocation to the plurality of quantum signals at a predetermined ratio.

Further, for example, the two or more optical signals include a plurality of digital coherent signals (for example, APN signals). The requirement information includes an element to be maximized in the performance of the digital coherent signal. The determination unit 122 determines the ratio at which at least one of the performance requirement of the quantum signal or the performance requirement of the digital coherent signal is satisfied and the element to be maximized is larger by any one of (1) a method of setting larger the ratio allocated to a specific digital coherent signal among the plurality of digital coherent signals, (2) a method of equalizing the ratios allocated to the plurality of digital coherent signals, or (3) a method of performing allocation to the plurality of digital coherent signals at a predetermined ratio.

### Second embodiment

Next, a second embodiment is described. In the description of the second embodiment, descriptions similar to those of the first embodiment are omitted, and portions different from the first embodiment are described. In the second embodiment, a case where the control device 1 and the variable optical coupler 5, which are configured as separate devices in the first embodiment, are configured by one device or system is described.

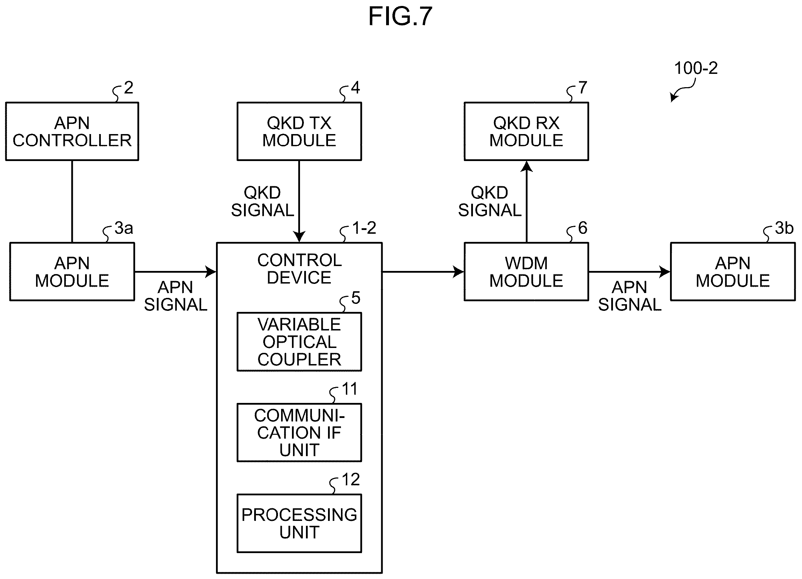

FIG. 7 is a diagram illustrating an example of a device configuration of a quantum cryptographic communication system 100-2 of the second embodiment. The quantum cryptographic communication system 100-2 includes a control device 1-2, an APN controller 2, APN modules 3a and 3b, a QKD TX module 4, a WDM module 6, and a QKD RX module 7.

The control device 1-2 of the second embodiment includes a variable optical coupler 5, a communication IF unit 11, and a processing unit 12. The example of FIG. 7 is different from the control device 1 of the first embodiment in that the control device 1-2 includes a variable optical coupler 5.

The operations of the variable optical coupler 5, the communication IF unit 11, and the processing unit 12 of the second embodiment are similar to those of the first embodiment, and thus a description thereof is omitted.

The output control unit 123 of the second embodiment outputs the control information described above, which includes a ratio determined by the determination unit 122, to the variable optical coupler 5 without using the communication IF unit 11.

Finally, an example of a hardware configuration of the control devices 1 and 1-2 of the first and second embodiments is described.

### Example of a hardware configuration

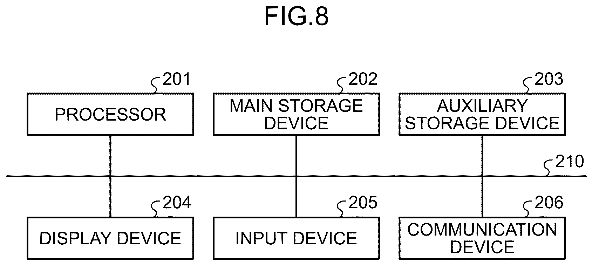

FIG. 8 is a diagram illustrating an example of a hardware configuration of the control device 1 (1-2) of the first and second embodiments. The control device 1 includes a processor 201, a main storage device 202, an auxiliary storage device 203, a display device 204, an input device 205, and a communication device 206. The processor 201, the main storage device 202, the auxiliary storage device 203, the display device 204, the input device 205, and the communication device 206 are connected via a bus 210.

The control device 1 does not necessarily include part of the above configuration. For example, in the case where the control device 1 can use an input function and a display function of an external device, the control device 1 does not necessarily include the display device 204 and the input device 205.

The processor 201 executes a program read from the auxiliary storage device 203 into the main storage device 202. The main storage device 202 is a memory such as a ROM and a RAM. The auxiliary storage device 203 is a hard disk drive (HDD), a memory card, or the like.

The display device 204 is, for example, a liquid crystal display or the like. The input device 205 is an interface for operating the control device 1. The display device 204 and the input device 205 may be configured by a touch panel or the like having a display function and an input function. The communication device 206 is an interface for communicating with other devices.

For example, the program to be executed by the control device 1 is recorded on a computer-readable storage medium such as a memory card, a hard disk, a CD-RW, a CD-ROM, a CD-R, a DVD-RAM, or a DVD-R as a file in an installable format or an executable format, and is provided as a computer program product.

Further, for example, a configuration in which the program to be executed by the control device 1 is stored on a computer connected to a network 200 such as the Internet and is provided by being downloaded via the network 200 is possible.

Further, for example, a configuration in which the program to be executed by the control device 1 is provided via the network 200 such as the Internet without being downloaded is possible. Specifically, a configuration in which control processing is executed by what is called an application service provider (ASP) type service, which, without transferring a program from a server computer, implements a processing function simply by an instruction to execute the program and acquisition of a result, is possible.

Further, for example, a configuration in which a program of the control device 1 is provided by being incorporated in a ROM or the like in advance is possible.

The program to be executed by the control device 1 has a module configuration including, of the functional configuration described above, functions that can be implemented also by programs. As actual hardware for these functions, the processor 201 reads the program from a storage medium and executes the program, and thereby the above functional blocks are loaded on the main storage device 202. That is, the above functional blocks are generated on the main storage device 202.

Some of or all the functions described above are not necessarily implemented by software, but may be implemented by hardware such as an integrated circuit (IC).

Further, the functions may be implemented using a plurality of processors 201; in this case, each processor 201 may implement one of the functions, or may implement two or more of the functions.

### Supplement

The above embodiments can be summarized in the following technical schemes.

### Technical scheme 1

A control device, comprising
a processing unit configured to:
determine a multiplex ratio at which two or more optical signals are to be multiplexed by a variable optical coupler, the multiplex ratio being determined based on requirement information about an optical signal representing a quantum signal or a digital coherent signal, the digital coherent signal being a signal of a channel different from a channel of the quantum signal; and
output, to the variable optical coupler, control information including the multiplex ratio.

### Technical scheme 2

The control device according to the technical scheme 1, wherein
the requirement information includes at least one of a performance requirement of the quantum signal or a performance requirement of the digital coherent signal, and
the processing unit determines the multiplex ratio satisfying at least one of the performance requirement of the quantum signal or the performance requirement of the digital coherent signal.

### Technical scheme 3

The control device according to the technical scheme 2, wherein
the requirement information further includes an element to be maximized in performance of the quantum signal or an element to be maximized in performance of the digital coherent signal, and
the processing unit determines the multiplex ratio at which at least one of the performance requirement of the quantum signal or the performance requirement of the digital coherent signal is satisfied and the element is larger.

### Technical scheme 4

The control device according to the technical scheme 3, wherein
the element to be maximized in the performance of the quantum signal is a communication speed of the quantum signal, and
the element to be maximized in the performance of the digital coherent signal is a communication speed of the digital coherent signal.

### Technical scheme 5

The control device according to any one of the technical schemes 1 to 4, wherein
the quantum signal is a quantum key distribution (QKD) signal, and
the digital coherent signal is an All-Photonics Network (APN) signal.

### Technical scheme 6

The control device according to any one of the technical schemes 1 to 5, further comprising the variable optical coupler configured to multiplex the two or more optical signals based on the multiplex ratio included in the control information.

### Technical scheme 7

The control device according to any one of the technical schemes 1 to 6, wherein the processing unit
determines a multiplex ratio at which the two or more optical signals including at least one quantum signal and including at least one digital coherent signal are to be multiplexed by the variable optical coupler, and
outputs, to the variable optical coupler, control information including the multiplex ratio.

### Technical scheme 8

The control device according to any one of the technical schemes 3 to 7, wherein
the two or more optical signals include a plurality of quantum signals,
the requirement information includes an element to be maximized in the performance of the quantum signal, and
the processing unit determines the multiplex ratio at which at least one of the performance requirement of the quantum signal or the performance requirement of the digital coherent signal is satisfied and the element is larger by one of:
   a method of setting larger a ratio allocated to a specific quantum signal among the plurality of quantum signals,
   a method of equalizing ratios allocated to the plurality of quantum signals, or
   a method of performing allocation to the plurality of quantum signals at a predetermined ratio.

### Technical scheme 9

The control device according to any one of the technical schemes 3 to 7, wherein
the two or more optical signals include a plurality of digital coherent signals,
the requirement information includes an element to be maximized in the performance of the digital coherent signal, and
the processing unit determines the multiplex ratio at which at least one of the performance requirement of the quantum signal or the performance requirement of the digital coherent signal is satisfied and the element is larger by one of:
   a method of setting larger a ratio allocated to a specific digital coherent signal among the plurality of digital coherent signals,
   a method of equalizing ratios allocated to the plurality of digital coherent signals, or
   a method of performing allocation to the plurality of digital coherent signals at a predetermined ratio.

### Technical scheme 10

A quantum cryptographic communication system, comprising:
the control device according to any one of the technical schemes 1 to 9; and
the variable optical coupler configured to multiplex the two or more optical signals based on the multiplex ratio included in the control information.

### Technical scheme 11

A control method implementing a computer as a control device, the method comprising:
determining a multiplex ratio at which two or more optical signals are to be multiplexed by a variable optical coupler, the multiplex ratio being determined based on requirement information about an optical signal representing a quantum signal or a digital coherent signal, the digital coherent signal being a signal of a channel different from a channel of the quantum signal; and
outputting, to the variable optical coupler, control information including the multiplex ratio.

### Technical scheme 12

A computer program comprising computer-readable instructions to be executed by a computer, the instructions causing the computer to perform:
determining a multiplex ratio at which two or more optical signals are to be multiplexed by a variable optical coupler, the multiplex ratio being determined based on requirement information about an optical signal representing a quantum signal or a digital coherent signal, the digital coherent signal being a signal of a channel different from a channel of the quantum signal; and
outputting, to the variable optical coupler, control information including the multiplex ratio.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims are intended to cover such forms or modifications as would fall within the scope of the inventions.

## Claims

1. A control device (1), comprising
a processing unit (12) configured to:
determine a multiplex ratio at which two or more optical signals are to be multiplexed by a variable optical coupler (5), the multiplex ratio being determined based on requirement information about an optical signal representing a quantum signal or a digital coherent signal, the digital coherent signal being a signal of a channel different from a channel of the quantum signal; and
output, to the variable optical coupler (5), control information including the multiplex ratio.

2. The control device (1) according to claim 1, wherein
the requirement information includes at least one of a performance requirement of the quantum signal or a performance requirement of the digital coherent signal, and
the processing unit (12) determines the multiplex ratio satisfying at least one of the performance requirement of the quantum signal or the performance requirement of the digital coherent signal.

3. The control device (1) according to claim 2, wherein
the requirement information further includes an element to be maximized in performance of the quantum signal or an element to be maximized in performance of the digital coherent signal, and
the processing unit (12) determines the multiplex ratio at which at least one of the performance requirement of the quantum signal or the performance requirement of the digital coherent signal is satisfied and the element is larger.

4. The control device (1) according to claim 3, wherein
the element to be maximized in the performance of the quantum signal is a communication speed of the quantum signal, and
the element to be maximized in the performance of the digital coherent signal is a communication speed of the digital coherent signal.

5. The control device (1) according to any one of claims 1 to 4, wherein
the quantum signal is a quantum key distribution (QKD) signal, and
the digital coherent signal is an All-Photonics Network (APN) signal.

6. The control device (1) according to any one of claims 1 to 4, further comprising the variable optical coupler (5) configured to multiplex the two or more optical signals based on the multiplex ratio included in the control information.

7. The control device (1) according to any one of claims 1 to 4, wherein the processing unit (12)
determines a multiplex ratio at which the two or more optical signals including at least one quantum signal and including at least one digital coherent signal are to be multiplexed by the variable optical coupler (5), and
outputs, to the variable optical coupler (5), control information including the multiplex ratio.

8. The control device (1) according to claim 3, wherein
the two or more optical signals include a plurality of quantum signals,
the requirement information includes an element to be maximized in the performance of the quantum signal, and
the processing unit (12) determines the multiplex ratio at which at least one of the performance requirement of the quantum signal or the performance requirement of the digital coherent signal is satisfied and the element is larger by one of:
a method of setting larger a ratio allocated to a specific quantum signal among the plurality of quantum signals,
a method of equalizing ratios allocated to the plurality of quantum signals, or
a method of performing allocation to the plurality of quantum signals at a predetermined ratio.

9. The control device (1) according to claim 3, wherein
the two or more optical signals include a plurality of digital coherent signals,
the requirement information includes an element to be maximized in the performance of the digital coherent signal, and
the processing unit (12) determines the multiplex ratio at which at least one of the performance requirement of the quantum signal or the performance requirement of the digital coherent signal is satisfied and the element is larger by one of:
a method of setting larger a ratio allocated to a specific digital coherent signal among the plurality of digital coherent signals,
a method of equalizing ratios allocated to the plurality of digital coherent signals, or
a method of performing allocation to the plurality of digital coherent signals at a predetermined ratio.

10. A quantum cryptographic communication system (100), comprising:
the control device (1) according to any one of claims 1 to 4; and
the variable optical coupler (5) configured to multiplex the two or more optical signals based on the multiplex ratio included in the control information.

11. A control method implementing a computer as a control device (1), the method comprising:
determining (S2) a multiplex ratio at which two or more optical signals are to be multiplexed by a variable optical coupler (5), the multiplex ratio being determined based on requirement information about an optical signal representing a quantum signal or a digital coherent signal, the digital coherent signal being a signal of a channel different from a channel of the quantum signal; and
outputting (S3), to the variable optical coupler (5), control information including the multiplex ratio.

12. A computer program comprising computer-readable instructions to be executed by a computer, the instructions causing the computer to perform:
determining (S2) a multiplex ratio at which two or more optical signals are to be multiplexed by a variable optical coupler (5), the multiplex ratio being determined based on requirement information about an optical signal representing a quantum signal or a digital coherent signal, the digital coherent signal being a signal of a channel different from a channel of the quantum signal; and
outputting (S3), to the variable optical coupler (5), control information including the multiplex ratio.
